# EUROPÄISCHE PATENTANMELDUNG

(11) **EP 0 938 060 A1**
(43) Veröffentlichungstag der Anmeldung: **25.08.1999**
(21) Anmeldenummer: 98810881.7
(22) Anmeldetag: 03.09.1998
(51) Int. Cl.: G06K 19/077

(54) **Verfahren zur Herstellung eines Chipobjektes und Chipobjekt**

(30) Priorität: 20.02.1998 CH 41498
(71) Anmelder: ESEC Management SA, 6330 Cham (CH); Sempac SA, 6330 Cham (CH)
(72) Erfinder: Betschart, Alois, 6318 Walchwill (CH); Ragg, Wolfram, 6332 Hagendorn (CH); Sacher, Dieter, 5400 Baden (CH); Tobler, Martin, 6003 Luzern (CH)

(57) **Zusammenfassung**

Verfahren zur Herstellung eines Chipobjektes (**10.1**) und Chipobjekt (**10.1**). Das Chipobjekt (**10.1**) umfasst einen Objektkörper (**12**) und ein Elektronikmodul (**14**), welches auf einer folienförmigen Struktur (**20**) aufgebaut ist. Zur Herstellung des Chipobjektes (**10.1**) wird das Elektronikmodul (**14**) in einen Formhohlraum (**100**) eingebracht, welcher dann mit einer zur Bildung des Objektkörpers (**12**) bestimmten Kunststoffmasse gefüllt wird. Vor dem Fixieren des Elektronikmoduls (**14**) in der Kunststoffmasse wird in einem Fixierbereich (**28**) der Struktur (**20**) mindestens ein Durchbruch (**32**) oder Wegbruch (**33**) angebracht, welcher anschliessend durch die Kunststoffmasse gefüllt wird.

## Beschreibung

Die Erfindung betrifft ein Verfahren zur Herstellung eines Chipobjektes, insbesondere einer Chipkarte, nach dem Oberbegriff des Patentanspruchs **1** und ein Chipobjekt, insbesondere eine Chipkarte, nach dem Oberbegriff des Patentanspruchs **9.**

Chipobjekte, insbesondere Chipkarten dieser Art bestehen im wesentlichen aus einem dünnen Objektkörper und einem im Objektkörper eingebetteten Elektronikmodul. Der Objektkörper ist aus einer gepressten bzw. gegossenen oder laminierten Kunststoffmasse hergestellt, in welcher das Elektronikmodul eingebettet und dadurch fixiert wird. Das Elektronikmodul besteht aus einem Halbleiterchip, der auf einer Struktur angeordnet und im allgemeinen von einem eine Modulkapsel bildenden Kunststoff umgeben ist. Für die Strukturen kommen elektrisch leitende, also metallische oder elektrisch nicht leitende Materialien in Frage.

Elektrisch leitende Strukturen bestehen im allgemeinen aus einem dünnen Metallstreifen, und elektrisch nicht leitende Strukturen umfassen im allgemeinen eine elektrisch nicht leitende Folie, beispielsweise aus Kunststoff oder Papier, welche ein- oder beidseitig mit einer elektrisch leitenden Schicht, im allgemeinen aus Kupfer, versehen sind. Die Struktur selbst ist praktisch nur im elastischen Bereich deformierbar, während der Bereich, in welchem sie plastisch deformierbar ist, sehr gering ist. Die elektrisch leitende Schicht kann durch Kleben, Walzen oder ein anderes mechanisches oder chemisches Verfahren an der Struktur befestigt werden. Die Struktur besitzt in ihrem Randbereich allseitig berandete Durchbrüche und/oder vom Folienrand ausgehende Wegbrüche und in ihrem Zentralbereich einseitig durch die leitende Schicht verschlossene Ausnehmungen. Der Halbleiterchip wird auf der Struktur befestigt und mit dem die Modulkapsel bildenden Kunststoff umgeben. Anschliessend wird das nun fertige Elektronikmodul ausgestanzt und mittels eines Klebeverfahrens im Objektkörper der Chipkarte eingebettet.

Das Klebeverfahren weist mehrere Nachteile auf, von welchen insbesondere die Temperaturabhängigkeit der Viskosität der verwendbaren Klebstoffe und die benötigte Rauhigkeit der zu verklebenden Flächen genannt sein sollen. Bei der Fixierung des Elektronikmoduls in einem durch Laminierung hergestellten Objektkörper können sich ausserdem gewisse vom Herstellungsprozess in oder am laminierten Objektkörper vorhandene Stoffe wie beispielsweise Paraffin als Nachteil erweisen. Damit bei Klebeverfahren dennoch befriedigende Ergebnisse erzielt werden können, müssen aufwendige chemische und mechanisch Reinigungs- und Aufrauhprozesse am Objektkörper und am Elektronikmodul Modul durchgeführt werden.

Um Elektronikmodule ohne Hebung in Objektkörpern zu fixieren, können sie in einem Formhohlraum mit einer zur Bildung des Objektkörpers vorgesehenen Kunststoffmasse umspritzt werden. Vorgängig müssen sie an einer Folie, beispielsweise einer FrontseitenEtikette, fixiert werden. Bei Elektronikmodulen mit elektrisch leitenden, also metallischen Strukturen geschieht dies durch plastische Deformation der Struktur. Bei Elektronikmodulen mit nicht leitenden Strukturen, welche, wie schon erwähnt, plastisch nicht verformbar sind, müsste die Fixierung des Elektronikmoduls an der Frontseiten-Etikette wiederum mit Hilfe von Klebstoff erfolgen, was dieselben Nachteile mit sich bringt die für Klebstoffverbindungen bereits weiter oben genannt wurden.

Die Aufgabe der Erfindung wird somit darin gesehen,
- ein Verfahren zur Herstellung eines Chipobjektes, insbesondere einer Chipkarte, vorzuschlagen, welches sich zur Fixierung von Elektronikmodulen beliebiger Art eignet, wobei Klebeprozesse zur Fixierung des Elektronikmoduls im Objektkörper vermieden werden, und
- ein Chipobjekt, insbesondere eine Chipkarte zu schaffen, bei welchem die Fixierung des Elektronikmoduls im Objektkörper klebstofffrei erfolgt.

Diese Aufgabe wird erfindungsgemäss gelöst
- für das Verfahren zur Herstellung des Chipobjektes, insbesondere der Chipkarte, durch die Merkmale des kennzeichnenden Teils des Patentanspruchs **1** und
- für das Chipobjekt, insbesondere die Chipkarte, durch die Merkmale des kennzeichnenden Teils des Patentanspruchs **9.**

Vorteilhafte Weiterbildungen des erfindungsgemässen Verfahrens und bevorzugte Ausführungsbeispiele des erfindungsgemässen Chipobjektes sind durch die abhängigen Patentansprüche **2** bis **8** bzw. **10** bis **16** definiert.

Die Erfindung beruht auf dem Gedanken, für die Fixierung des Elektronikmoduls im Objektkörper nicht einen Klebstoff sondern die zur Bildung des Objektkörpers ohnehin verwendete Kunststoffmasse zu benutzen. Dadurch erspart man sich den Verfahrensschritt der Klebung und den Klebstoff selbst. Weitere Vorteile des erfindungsgemässen Verfahrens sind darin zu sehen, dass es sich in einem weiteren Temperaturbereich, mindestens zwischen 0° C und 50° C, durchführen lässt als das herkömmliche Klebeverfahren, dass vorgängige Oberflächenbehandlungen wie Aufrauhungen oder Reinigungsprozesse nicht notwendig sind, und dass die mit dem neuen Verfahren erzeugte Fixierung des Elektronikmoduls im Objektkörper durch Feuchtigkeit und durch Erschütterung nicht beeinträchtigt wird. Das neue Verfahrens lässt sich unabhängig vom Material der Struktur des Elektronikmoduls durchführen, so dass sowohl Elektronikmodule mit Strukturen aus Kunststoff wie auch aus Metall mit Hilfe des neuen Verfahrens in den Objektkörpern angebracht werden können. Ein zusätzlicher Vorteil liegt darin, dass sich beim erfindungsgemässen Chipobjekt das Elektronikmodul, obwohl es nicht allseitig von der Kunststoffmasse des Objektkörpers umschlossen ist, nicht zerstörungsfrei aus dem Objektkörper lösen lässt, so dass die Fälschungssicherheit des neuen Chipobjektes wesentlich höher ist als beispielsweise die Fälschungssicherheit von Chipkarten mit eingeklebten Elektronikmodulen, welch letztere sich zerstörungsfrei aus dem Kartenkörper lösen lassen.

Erfindungsgemäss wird der Fixierbereich der Struktur, welcher nicht mit der das Elektronikmodul umgebenden Modulkapsel besetzt ist, mit mindestens einem, im allgemeinen aber mit mehreren allseits berandeten Durchbrüchen und/oder vom Strukturrand ausgehenden Wegbrüchen versehen. In besonders rationeller Weise können die Durchbrüche und Wegbrüche im selben Arbeitsgang erzeugt werden wie das Ausstanzen des Elektronikmoduls. Derjenige Bereich der Struktur, der mit der Modulkapsel besetzt ist und der daher auch als Wirkbereich bezeichnet werden kann, wird nicht durch Durchbrüche oder Wegbrüche verändert. Das Elektronikmodul wird dann in einen Formhohlraum gebracht, in welchen die Kunststoffmasse für den Objektkörper durch Giessen, Pressen oder Spritzen eingebracht und anschliessend ggfs. verdichtet wird. Die Kunststoffmasse dringt dabei auch in die zuvor erzeugten Durch- bzw. Wegbrüche ein und bildet dort eine Art Kunststoffzapfen, wodurch die Fixierung des Elektronikmoduls im Objektkörper zustande kommt.

Üblicherweise ist das Elektronikmodul so konzipiert, dass der mit der Modulkapsel besetzte Wirkbereich der Struktur deren zentralen Bereich bildet, welcher vom Fixierbereich mit den Durch- und/oder Wegbrüchen umrandet ist.

Das Elektronikmodul bzw. seine Struktur müssen während des Einbringens der Kunststoffmasse im Formhohlraum gehalten werden. Zu diesem Zweck kann der Formhohlraum, der im allgemeinen durch ein Formunterteil und ein Formoberteil begrenzt wird, an einer Anlagefläche, beispielsweise des Formunterteils, eine Ausnehmung aufweisen, welche mit einem einen Unterdruck erzeugenden System verbunden ist. Das Elektronikmodul wird dann so auf diese Anlagefläche gelegt, dass sein Wirkbereich sich über der Ausnehmung befindet, während sein Fixierbereich auf der Umgebung der Ausnehmung aufliegt. Durch den Unterdruck wird der Wirkbereich der Struktur nach unten gezogen, wobei sich die Struktur leicht U-ähnlich elastisch deformiert, so dass der Fixierbereich schräg aufwärts in den Formhohlraum ragt. Von der eingebrachten Kunststoffmasse wird der Fixierbereich in dieser deformierten Konfiguration allseitig umgeben und festgehalten. Anschliessen wird durch Stempeldruck die Struktur wieder mindestens annähernd in eine Ebene zurückverformt, so dass die Kontaktierung nicht durch die Deformation der Struktur beeinträchtigt wird Auf diese Weise lässt sich in einfachster und rationellster Weise ein Chipobjekt erzeugen, bei welchem aus herstellungsmässigen Gründen keine Frontseiten-Etikette notwendig ist.

In gewissen Fällen ist aber das Vorhandensein einer Frontseiten-Etikette erwünscht, und um ein Chipobjekt mit einer Frontseiten-Etikette herzustellen, wird eine diese Frontseiten-Etikette bildende Folie in den Formhohlraum gebracht und das Elektronikmodul auf ihr angeordnet. Die Frontseiten-Etikette weist eine Ausnehmung auf, über welche der Wirkbereich des Elektronikmoduls zu liegen kommt, während sich der Fixierbereich auf der Folie bzw. dem die Ausnehmung umgebenden Randbereich abstützt.

Unabhängig davon, ob ein Chipobjekt wie beispielsweise eine Chipkarte ohne oder mit einer Rückseiten-Etikette hergestellt werden soll, wird die Struktur des Elektronikmoduls im Formhohlraum während des Einbringens der Kunststoffmasse so niedergehalten, dass ihr Wirkbereich in einer Ebene mit der Anlagefläche des Formunter- oder Oberteils angeordnet oder von dieser Anlagefläche beabstandet ist; im letzteren Falle ist der Wirkbereich im allgemeinen in den Objektkörper rückversetzt.

Im weiteren kann eine Rückseiten-Etikette für das Chipobjekt bzw. die Chipkarte vor dem in den Formhohlraum gebracht werden, bevor die Kunststoffmasse eingebracht wird; die Rückseiten-Etikette wird an die der zuvor genannten Anlagefläche gegenüberliegende Anlagefläche des Formhohlraums angelegt.

Wenn die als Struktur verwendete Folie metallisch ist, so besteht sie im allgemeinen aus einer Schicht. Strukturen aus Kunststoffolien weisen mindestens zwei Schichten auf, nämlich erstens die Kunststoffolie selbst und zweitens den auf mindestens einer ihrer Flächen angebrachten elektrisch leitenden bzw. metallischen Belag, der durch einzelne, durch Zwischenräume getrennten Abschnitte gebildet wird und im allgemeinen nur bereichsweise an der Kunststofffolie angebracht ist. Für gewisse Zwecke werden auch Kunststofffolien mit mehreren, also mindestens zwei Kunststoffschichten, verwendet, die dann einschliesslich des leitenden Belages insgesamt aus mindestens drei Schichten bestehen. Benachbarte elektrisch nicht leitende Schichten können ausserdem durch eine Zusatzschicht, beispielsweise eine Kleberschicht und/oder eine elektrisch leitende Schicht, getrennt sein. Bei allen Strukturen mit mehr als einer Schicht können die Aus- und/oder Wegbrüche so ausgebildet sein, dass die Ausbruchsabschnitte der beiden Schichten zwar kommunizieren, die Ausbruchsabschnitte der Schichten aber einen seitlichen Versatz aufweisen, so dass der Ausbruchsabschnitt der äusseren Schicht seitlich über den Ausbruchsabschnitt der inneren Schicht hinausragt. Der Kunststoffzapfen, der wie weiter oben beschrieben in jedem Durchbruch gebildet wird, hat in diesem Falle eine nagel- bzw. nietähnliche oder abgekröpfte Form; ein nagelähnlicher Kunststoffzapfen beispielsweise weist einen engeren Halsteil im Ausbruchsabschnitt der inneren Schicht und einen breiteren Kopfteil im Ausbruchsabschnitt der äusseren Schicht auf, wodurch eine formschlüssige und sehr haltbare Verbindung entsteht. Dieses Befestigungsprinzip kann ggfs. auch zur Verbesserung der Fixierung der Frontseiten-Etikette und der Rückseiten-Etikette, insbesondere wenn diese mehrlagig ausgebildet sind, benutzt werden.

Eine weitere Möglichkeit zur Verbesserung der Fixierung der Struktur lässt sich erreichen, wenn die Abschnitte des elektrisch leitenden, in Abschnitten auf die Strukturen aus Kunststoff aufgebrachte Belag nicht an den Begrenzungen der Durch- und/oder Wegbrüche enden sondern mit ihren Abschnittsenden unter die Durch- und/oder Wegbrüchen ragen. Raum hineinragt. Diese Abschnittsenden können dann, natürlich vor der Fixierung der Struktur durch die Kunststoffmasse, aus der Ebene der Struktur zur Mitte des Objektkörpers des entstehenden Chipobjektes hin aus gebogen werden, vorzugsweise so, dass sie an den Berandungen der Durch- oder Wegbrüche anlegen. Die ausgebogenen Abschnittsenden bilden dann im fertigen Chipobjekt kleine in die Kunststoffmasse ragende Ankerteile. Die Wirkung dieser Ankerteile kann verbessert werden, wenn die abzubiegenden Enden so geformt sind, dass sie eine Art Widerhaken aufweisen.

Im folgenden wird die Erfindung anhand von Ausführungsbeispielen und mit Bezug auf die Zeichnung ausführlich beschrieben. Es zeigen:
- **Fig. 1**: ein erstes Chipobjekt nach der Erfindung, in einem Formhohlraum, geschnitten;
- **Fig. 2**: ein ausgestanztes Elektronikmodul, von der Seite der Struktur aus gesehen;
- **Fig. 3**: das in **Fig. 1** dargestellte Chipobjekt, ausschnittweise, in einem Schnitt längs der Linie **III-III** der **Fig. 1;**
- **Fig. 4**: ein zweites Chipobjekt nach der Erfindung, in einem Formhohlraum, in gleicher Darstellung wie **Fig. 1;**
- **Fig. 5**: ein drittes Chipobjekt nach der Erfindung, in einem Formhohlraum` in gleicher Darstellung wie **Fig. 1;**
- **Fig. 6**: ein viertes Chipobjekt nach der Erfindung, in einem Formhohlraum, in gleicher Darstellung wie **Fig. 1;**
- **Fig. 7A**: eine Randzone eines fünften Chipobjektes nach der Erfindung, geschnitten;
- **Fig. 7B**: eine Randzone eines sechsten Chipobjektes nach der Erfindung, in gleicher Darstellung wie **Fig. 7A;** und
- **Fig. 8**: eine Randzone eines siebten Chipobjektes nach der Erfindung, ebenfalls in gleicher Darstellung wie **Fig. 6.**

In der folgenden Beschreibung werden für funktionell gleiche Bestandteile verschiedener Chipobjekte dieselben Bezugszeichen verwendet, auch wenn diese Bestandteile in Einzelheiten unterschiedlich ausgebildet und/oder angeordnet sind. Lagebestimmungen wie 'oben' oder 'unten' beziehen sich auf die Stellungen, welche die Chipobjekte in den Figuren einnehmen.

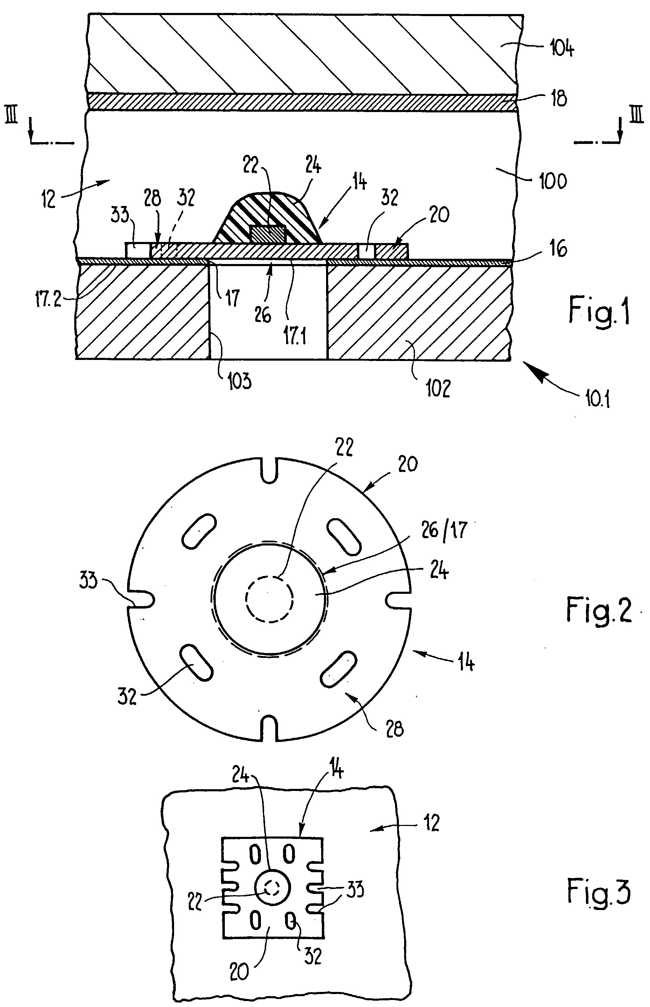

Das Chipobjekt **10.1** gemäss **Fig. 1** ist eine in einem Schnitt senkrecht zu ihrer Hauptausdehnungsrechtung dargestellte Chipkarte; es weist einen Objektkörper **12** aus einer gespritzten oder gepressten und ggfs. anschliessend verdichteten Kunststoffmasse sowie ein darin fixiertes Elektronikmodul **14** auf. Die Aussenflächen des Chipobjektes **10.1** werden durch eine Frontseiten-Etikette **16** und eine Rückseiten-Etikette **18** gebildet. Während die Rückseiten-Etikette **18** den gesamten Objektkörper **12** bedeckt, weist die Frontseiten-Etikette **16** eine sich im wesentlichen unterhalb des Elektronikmoduls **14** erstreckende Ausnehmung **17** auf.

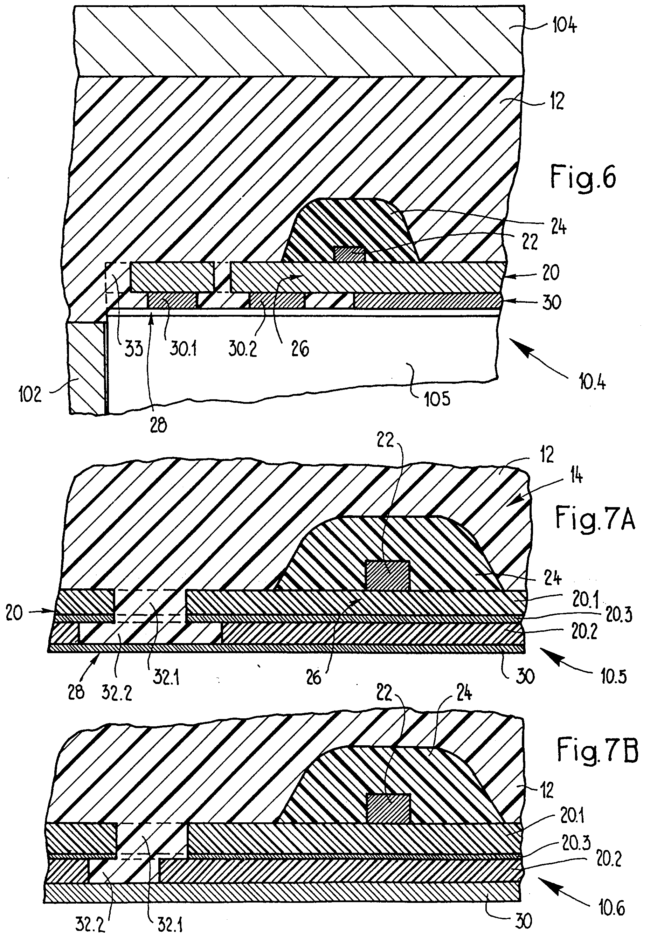

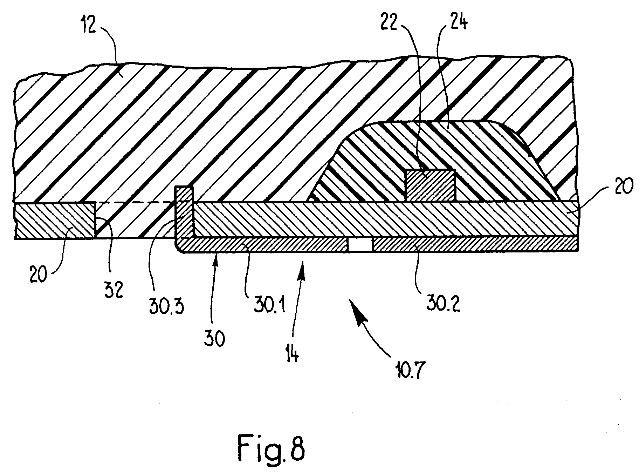

Das Elektronikmodul **14** ist auf einer Struktur **20** aufgebaut, welche durch eine elektrisch nicht leitende Folie aus einem Kunststoff, beispielsweise aus PET, Glasfaser Epoxy, Polyimid, Kapton oder aus einem anderen geeigneten Material, gebildet ist, wobei sich diese Folie praktisch nur elastisch deformieren lässt. Auf dieser Struktur **20** ist ein Halbleiterchip **22** befestigt, im allgemeinen durch Klebung, welcher sich in einem Modulgehäuse in Form einer Kunststoffkapsel **24** befindet. Der unterhalb des Halbleiterchips **22** befindliche Bereich der Struktur **20** wird als Wirkbereich **26** bezeichnet, während der Rest der Struktur **20** im wesentlichen einen Fixierbereich **28** bildet, über welchen die Struktur **20** in der Kunststoffmasse des Objektkörpers **12** fixiert wird. Das Elektronikmodul **14** ist so im Objektkörper **12** angeordnet, dass sich der Wirkbereich **26** oberhalb der Ausnehmung der Frontseiten-Etikette **16** befindet und somit einen Bereich der in **Fig. 1** nach unten gewandten Aussenfläche des Chipobjektes **10.1** bildet. Der Fixierbereich **28** liegt auf der Frontseiten-Etikette **16** auf. Die untere bzw. äussere Fläche der Struktur **20** ist, wie nur aus **Fig. 6** und **Fig. 8** ersichtlich, bereichsweise mit einer weiteren Schicht **30,** nämlich mit Abschnitten **30.1, 30.2** eines elektrisch leitenden Belags, beispielsweise aus Kupfer bzw. vergoldetem Kupfer, versehen. In üblicher Weise sind geeignete Bereiche des Halbleiterchips **22** durch nicht dargestellte Verbindungsdrähte, welche durch ebenfalls nicht dargestellte Öffnungen der Struktur **20** geführt sind, mit den entsprechenden Abschnitten **30.1, 30.2** des elektrisch leitenden Belages verbunden. Bei den vorliegenden Ausführungsbeispielen ist das Elektronikmodul **22** in der Mitte der Struktur **20** angeordnet, und dadurch nimmt der Wirkbereich **26** eine zentrale Lage innerhalb der Struktur **20** ein, während der den Wirkbereich **26** umgebende, auf der Frontseiten-Etikette **16** aufliegende Randbereich der Struktur **20** den Fixierbereich **28** der Struktur **20** bildet.

Der Fixierbereich **28** der Struktur **20** weist mehrere, allseitig vom Folienmaterial der Struktur **20** berandete Durchbrüche **32** und/oder vom äusseren Rand der Struktur **20** ausgehende Wegbrüche **33** auf. Die Formgebung des Fixierbereichs **28** ist aus **Fig. 2,** die ein rundes Elektronikmodul **14** vor seiner Fixierung darstellt, und aus **Fig. 3** ersichtlich, in welcher ein quadratisches Elektronikmodul **14,** fixiert in der Kunststoffmasse des Objektkörpers **12,** dargestellt ist.

Die Durchbrüche **32** und/oder Wegbrüche **33** sind gemäss **Fig. 1** im fertigen Chipobjekt **10.1** mit der auch den Objektkörper **12** bildenden Kunststoffmasse gefüllt, wodurch die Struktur **20** und damit das Elektronikmodul **14** im Objektkörper **12** fixiert sind.

In der Darstellung gemäss **Fig. 1** ist das Chipobjekt **10.1** in einem Formhohlraum **100** angeordnet, der durch einen Formunterteil **102** und einen Formoberteil **104** begrenzt ist. Der Formunterteil **102** weist eine Ausnehmung **103** auf, deren Form und Grösse im wesentlichen dem Wirkbereich **26** entsprechen. Die Ausnehmung **103** ist in nicht dargestellter Weise mit einem System verbunden, mittels welchem ein Unterdruck in der Ausnehmung **103** erzeugbar ist. Zur Herstellung des Chipobjektes **10.1** werden die Frontseiten-Etikette **16** am Formunterteil **102** und die Rückseiten-Etikette **18** am Formoberteil **104** angelegt und dort festgehalten; und das Elektronikmodul **14** wird an der vorgesehenen Stelle auf die Frontseiten-Etikette **16** aufgelegt. Durch den in der Ausnehmung **103** herrschenden Unterdruck wird das Elektronikmodul **14** festgehalten, während die zur Bildung des Objektkörpers **12** vorgesehene Kunststoffmasse in den Formhohlraum **100** eingespritzt bzw. eingepresst wird. Dabei füllt die Kunststoffmasse den gesamten Raum zwischen der Frontseiten-Etikette **16** und der Rückseiten-Etikette **18,** einschliesslich der von oben zugänglichen Durchbrüche **32** und der von oben und seitlich zugänglichen Wegbrüche **33** der Struktur **20.**

Im fertigen Chipobjekt **10.1** gemäss **Fig. 1** bildet, wie weiter oben erwähnt, der Wirkbereich **26** der Struktur **20** des Elektronikmoduls **14** einen Aussenflächenbereich **17.1** der unteren Aussenfläche des Chipobjektes **10.1**, während der restliche untere Aussenflächenteil **17.2** des Chipobjektes **10.1** durch die Frontseiten-Etikette **16** gebildet ist. Der Aussenflächenbereich **17.1** liegt aber nicht fluchtend bzw. in einer Ebene mit dem Aussenflächenteil **17.2** sondern ist um die Dicke der die Frontseiten-Etikette **16** bildenden Folie zurückversetzt. Dies hat den Vorteil, dass sich der durch die Frontseiten-Etikette **16** gebildete Aussenflächenteil **17.2** nach der Entnahme des Chipobjektes **10.1** aus dem Formhohlraum problemlos bedrucken lässt.

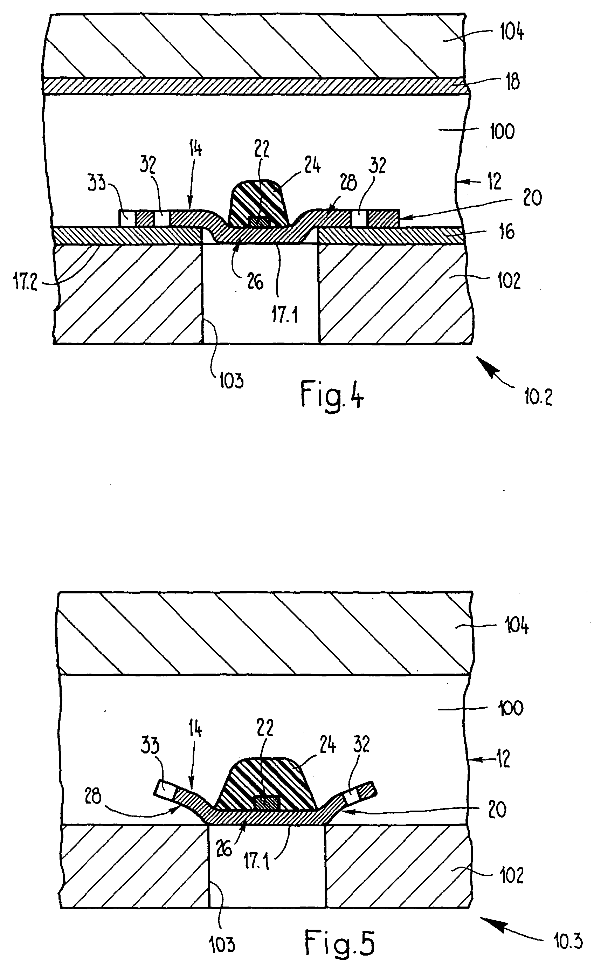

**Fig. 4** zeigt ein Chipobjekt **10.2**, ebenfalls in Form einer Chipkarte, welche aus den gleichen Bestandteilen aufgebaut ist und sich in einem gleichen Formhohlraum **100** befindet wie das Chipobjekt **10.1** der **Fig. 1.** Der Unterschied zwischen dem Chipobjekt **10.1** der **Fig. 1** und dem Chipobjekt **10.2** der **Fig. 4** besteht darin, dass das Chipobjekt **10.2** der **Fig. 4** eine plane untere Aussenfläche besitzt; der Aussenflächenbereich **17.1**, gebildet durch die Struktur **20,** und der Aussenflächenteil **17.2,** gebildet durch die Frontseiten-Etikette **16,** liegen also fluchtend in einer Ebene. Die Struktur **20** ist so deformiert, dass der Fixierbereich **28** und der Wirkbereich **16** im wesentlichen in parallelen Ebenen angeordnet sich, deren gegenseitiger Abstand der Dicke der die Frontseiten-Etikette **16** bildenden Folie entspricht. Zu diesem Zwecke wird beispielsweise ein Elektronikmodul **14** verwendet, dessen Struktur **20** während der Herstellung des Chipobjektes **10.2** durch den in der Ausnehmung **103** herrschenden Unterdruck elastisch deformiert und dadurch in die erforderliche Form gebracht wird. Alternativ kann ein Elektronikmodul **14** mit einer in der erforderlichen Form geprägten Struktur **20** verwendet werden; dazu ist es allerdings notwendig, eine Struktur **20** zu verwenden, die sich plastisch deformieren, beispielsweise prägen, lässt.

In **Fig. 5** ist ein weiteres Chipobjekt **10.3,** ebenfalls in Form einer Chipkarte und ebenfalls in einem Formhohlraum **100** angeordnet, dargestellt. Das Chipobjekt **10.3** weist nur einen Kartenkörper **12** und eine Elektronikmodul **14** mit einer Struktur **20**, jedoch weder eine Frontseiten-Etikette noch eine Rückseiten-Etikette auf. Durch den in der Ausnehmung **103** des Formunterteils **102** herrschenden Unterdruck wird die Struktur **20** vor dem Einbringen der Kunststoffmasse in den durch den Formunterteil **102** und den Formoberteil **104** gebildeten Formhohlraum so deformiert, dass der Randbereich, der auch den Fixierbereich **28** bildet, schräg aufwärts in den Formhohlraum erstreckt. Beim Einspritzen oder Einpressen der zur Bildung des Objektkörpers **12** vorgesehenen Kunststoffmasse füllt diese die Durchbrüche **32** und/oder Wegbrüche **30** des Fixierbereichs **28** der Struktu**r 20** und umgibt den Fixierbereich **28** allseitig, mit Ausnahme natürlich der Verbindung zwischen Fixierbereich **28** und Wirkbereich **26.** Auf diese Weise erhält man eine besonders gute Fixierung des Elektronikmoduls **14** im Objektkörper **12.** Es sei noch darauf hingewiesen, dass gemäss **Fig. 5** die untere Aussenfläche des etikettenfreien Chipobjektes **10.3** plan ist, dass aber auch etikettenfreie Chipobjekte erzeugt werden können, die einen zurückgesetzten Aussenflächenbereich **17.1** aufweisen.

Ein weiteres Chipobjekt **10.4** ist in **Fig. 6** dargestellt. Hier befinden sich die Abschnitte **30.1, 30.2** des elektrisch leitenden Belages **30** nicht nur am Wirkbereich **26** der Struktur **20,** also unterhalb der das Elektronikmodul **22** einschliessenden Kunststoffkapsel **24,** sondern sie erstrecken sich auch in den Fixierbereich **28** der Struktur. **20.** Zwischenräume zwischen zwei benachbarten Abschnitten **30.1, 30.2** liegen jeweils unterhalb von Durchbrüchen **32** oder Wegbrüchen **33** der Struktur **20,** ragen aber seitlich über die entsprechenden Durchbrüche **32** bzw. Wegbrüche **33** hinaus. Im fertigen Chipobjekt **10.4** bildet dann die Kunststoffmasse in den kommunizierenden Durchbrüchen **32** bzw. Wegbrüchen **33** einerseits und in den und Zwischenräumen der Abschnitte **30.1, 30.2** anderseits gewissermassen nagel- bzw. nietenähnliche Kunststoffzapfen mit engeren Halsteilen in den Durchbrüchen **32** und erweiterten Kopfteilen in den Zwischenräumen der Abschnitte **30.1, 30.2.** In der Ausnehmung des Formunterteils **102** ist ein Stempel **105** angeordnet, mit welchem das Elektronikmodul **14** relativ zur Aussenfläche des Chipobjektes **10.4** zurückversetzt werden kann. Die auf diese Weise realisierte Fixierung ist besonders zuverlässig.

Dasselbe Prinzip einer Fixierung mit einem nagel- oder nietenähnlichen Gebilde aus Kunststoff wird auch bei weiteren Chipobjekten **10.5** gemäss **Fig. 7A** und **10.6** gemäss **Fig. 7B** angewendet. Die Chipobjekte **10.5** und **10.6** besitzen Elektronikmodule **14**, deren Strukturen **20** durch mehrere Schichten **20.1, 20.2** aus Kunststoff gebildet sind; der elektrisch leitende, in Abschnitten **30** angebrachte Belag befindet sich unterhalb der unteren Schicht **20.2.** Zwischen den Schichten **20.1** und **20.2** ist eine elektrisch leitende Schicht **20.3** angeordnet, die aber nicht in jedem Fall vorhanden sein muss. Der Fixierbereich **28** der Struktur **20** weist wie bei den Chipobjekten **10.1** bis **10.4** Durchbrüche auf. Jeder Durchbruch besteht aus einem Durchbruchteil **32.1** in der Schicht **20.1** und einen Durchbruchteil **32.2** in der Schicht **20.2** auf. Die Durchbruchteile **32.1** und **32.2** kommunizieren, weisen aber seitlich relativ zueinander einen Versatz auf. Gemäss **Fig. 7A** entsteht durch diesen Versatz wiederum ein nagel- oder nietartiger Kunststoffzapfen mit einem engeren Halsteil und einem weiteren Kopfteil. Gemäss **Fig. 7B** entsteht durch den Versatz ein gewissermassen abgekröpfter Kunststoffzapfen..

**Fig. 8** zeigt ein weiteres Chipobjekt **10.7** mit einer verbesserten Fixierung der Struktur **20** des Elektronikmoduls **14** in der Kunststoffmasse des Objektkörpers **12.** Die Abschnitte **30.1, 30.2** der Schicht **30** des elektrisch leitenden Belages der Struktur **20** sind so ausgebildet und angeordnet, dass sie Abschnittsenden **30.3** aufweisen, die unter die Durchbrüche **32** bzw. Wegbrüche **33** ragen und die vor dem Einbringen der Kunststoffmasse längs der Vertikalberandung der Durchbrüche **32** und/oder Wegbrüche **33** zum Inneren des Objektkörpers **12** ausgebogen werden, um eine Art Anker zu bilden.

## Patentansprüche

1. Verfahren zur Herstellung eines Chipobjektes (**10.1, 10.2, 10.3, 10.4, 10.5, 10.6, 10.7**), insbesondere einer Chipkarte, welche einen Objektkörper (**12**) aus einer Kunststoffmasse und ein im Objektkörper (**12**) fixiertes, auf einer folienförmigen Struktur (**20**) aufgebautes Elektronikmodul (**14**) umfasst, wobei das Elektronikmodul (**14**) in einen Formhohlraum (**100**) gelegt und die Kunststoffmasse in den Formhohlraum (**100**) einbracht wird,
**dadurch gekennzeichnet**
dass in einem Fixierbereich (**28**) der Struktur (**20**) mindestens ein allseits berandeter Ausbruch (**32**) und/oder ein von der Strukturberandung ausgehender Wegbruch (**33**) erzeugt wird, bevor das Elektronikmodul (**14**) in den Formhohlraum (**100**) gebracht wird, und dass die zum Fixieren des Elektronikmoduls (**14**) in den Formhohlraum (**100**) eingebrachte Kunststoffmasse den mindestens einen Durchbruch (**32**) bzw. Wegbruch (**33**) füllt, um das Elektronikmodul (**14**) im Objektkörper (**12**) zu fixieren, wobei ein Wirkbereich (**26**) der Struktur (**20**) von Kunststoffmasse unbedeckt bleibt, um einen Aussenflächenbereich (**17.1**) des Chipobjektes (**10.1, 10.2, 10.3, 10.4, 10.5, 10.6, 10.7**) zu bilden.

2. Verfahren nach Patentanspruch **1,**
**dadurch gekennzeichnet,**
dass der Wirkbereich (**26**) der zentrale Bereich der Struktur (**20**) ist, oberhalb dessen das Elektronikmodul (**14**) angeordnet ist.

3. Verfahren nach Patentanspruch **2,**
**dadurch gekennzeichnet,**
dass die Struktur (**20**) während des Einbringens der Kunststoffmasse in den Formhohlraum (**100**) mit elastisch oder plastisch deformiertem, aufwärts in den Formhohlraum (**100**) ragendem Fixierbereich (**28**) gehalten wird, damit die einzubringende Kunststoffmasse den Fixierbereich (**26**) allseitig umgibt.

4. Verfahren nach mindestens einem der Patentansprüche **1** bis **3,**
**dadurch gekennzeichnet,**
dass die Struktur (**20**) während des Einbringens der Kunststoffmasse so im Formhohlraum (**100**) niedergehalten wird, dass der Wirkbereich (**26**) in einer Ebene mit einer Wandung eines den Formhohlraum (**100**) begrenzenden Formunterteil (**102**) angeordnet oder vom Formunterteil (**102**) beabstandet ist.

5. Verfahren nach mindestens einem der Patentansprüche **1** bis **4,**
**dadurch gekennzeichnet,**
dass die Struktur (**20**) mit dem Elektronikmodul (**14**) im Formhohlraum (**100**) auf eine folienartige Frontseiten-Etikette (**16**) gelegt wird, wobei der Wirkbereich (**26**) über eine Ausnehmung (**17**) der Frontseiten-Etikette (**16**) und der Fixierbereich (**28**) auf die Frontseiten-Etikette (**16**) selbst zu liegen kommen.

6. Verfahren nach mindestens einem der Patentansprüche **1** bis **5,**
**dadurch gekennzeichnet,**
dass vor dem Einbringen der Kunststoffmasse eine Rückseiten-Etikette (**18**) in den Formhohlraum (**100**) gebracht wird, welche dazu bestimmt ist, am fertigen Chipobjekt (**10.1, 10.2**) die der Frontseiten-Etikette (**16**) gegenüberliegende Aussenfläche zu bilden.

7. Verfahren nach mindestens einem der Patentansprüche **1** bis **6,**
**dadurch gekennzeichnet,**
dass die Struktur (**20**) mindestens zwei Schichten (**20,1, 20.2; 30**) aufweist, wobei der mindestens eine Durchbruch (**32**) und/oder Wegbruch (**33**) oder ein Zwischenraum zweier Abschnitte (**30.1, 30.2**) einer Schicht (**30**) so ausgebildet und angeordnet ist, dass ein erster Durchbruchteil (**32.1**) bzw. Wegbruchteil (**33.1)** in der einen Schicht (**20.1**) und ein zweiter Durchbruchteil (**32.2**) bzw. Wegbruchteil (**33.2**) bzw. Zwischenraum in der anderen Schicht (**20.2; 30**) entsteht, wobei der Durchbruch- bzw. Wegbruchteil (**32.1, 33.1**) mit dem Durchbruch- bzw. Wegbruchteil(**32.2, 33.2**) oder dem Zwischenraum kommuniziert und einen seitlichen Versatz aufweist, derart, dass der durch die Kunststoffmasse gebildete Kunststoffzapfen eine nagelähnliche oder abgekröpfte Form besitzt.

8. Verfahren nach mindestens einem der Patentansprüche **1** bis **6,**
**dadurch gekennzeichnet,**
dass die Abschnitte (**30.1, 30.2**) der bereichsweise vorhandenen metallischen Schicht (**30**) Abschnittsenden (**30.3**) besitzen, die unter die Durchbrüche (**32**) bzw. Wegbrüche (**33**) ragen und vor dem Fixieren des Elektronikmoduls (**14**) in der Kunststoffmasse längs Vertikalberandungen der Durchbrüche (**32**) bzw. Wegbrüche (**33**) zum Inneren des Objektkörpers (**12**) umgebogen werden, um Anker für die Struktur (**20**) im Objektkörper (**12**) zu bilden.

9. Chipobjekt (**10.1, 10.2, 10.3, 10.4, 10.5, 10.6, 10.7**), insbesondere Chipkarte, mit einem Objektkörper (**12**) aus einer gespritzten oder gepressten Kunststoffmasse und einem Elektronikmodul (**14**), welches eine folienförmige Struktur (**20**) und einen auf der Struktur (**20**) angeordneten Halbleiterchip (**22**) besitzt, wobei ein Wirkbereich (**26**) der dem Halbleiterchip (**22**) abgewandten Fläche der Struktur (**20**) einen Aussenflächenbereich (**17.1**) des Chipobjektes (**10.1, 10.2, 10.3, 10.4, 10.5, 10.6, 10.7**) bildet,
**dadurch gekennzeichnet,**
dass die Struktur (**20**) einen Fixierbereich (**28**) besitzt, in welchem mindestens ein allseits berandeter Durchbruch (**32**) und/oder mindestens ein vom Strukturaussenrand ausgehender Wegbruch (**33**) angeordnet ist, wobei jeder Durchbruch (**32**) und/oder Wegbruch (**33**) mit der Kunststoffmasse gefüllt ist, um das Elektronikmodul (**14**) im Chipobjekt (**10.1, 10.2, 10.3, 10.4, 10.5, 10.6, 10.7**) zu fixieren.

10. Chipobjekt (**10.1, 10.2, 10.3, 10.4, 10.5, 10.6, 10.7**) nach Patentanspruch **9, dadurch gekennzeichnet,**
dass der Wirkbereich (**26**) der mittlere Bereich und der Fixierbereich (**28**) der den mittleren Bereich umgebende Randbereich der Struktur (**20**) des Elektronikmoduls (**14**) ist.

11. Chipobjekt (**10.1, 10.2, 10.3, 10.4, 10.5, 10.6, 10.7**) nach mindestens einem der Patentansprüche **9** bis **10,**
**dadurch gekennzeichnet,**
dass der den Wirkbereich (**26**) bildende Teil der Struktur (**20)** in einer Ebene mit der Aussenfläche des Objektkörpers (**12**) angeordnet oder relativ zu dieser Aussenfläche des Objektkörpers (**12**) versetzt, vorzugsweise ins Innere des Objektkörpers (**12**) zurückgesetzt ist.

12. Chipobjekt (**10.3**) nach mindestens einem der Patentansprüche **9** bis **11,**
**dadurch gekennzeichnet,**
dass der Fixierbereich (**28**) zum Inneren des Objektkörpers (**12)** abgekröpft oder gebogen und allseitig, mit Ausnahme von Verbindungen mit dem Wirkbereich (**16**), von der Kunststoffmasse umgeben ist.

13. Chipobjekt (**10.1, 10.2, 10.4, 10.5, 10.6, 10.7**) nach mindestens einem der Patentansprüche **9** bis **11,**
**dadurch gekennzeichnet,**
dass das Chipobjekt an seiner den Wirkbereich (**26**) der Struktur (**20**) enthaltenden Aussenfläche eine Frontseiten-Etikette (**16**) besitzt, welche eine mit dem Wirkbereich (**26**) mindestens annähernd fluchtende Aussparung (**17**) aufweist, wobei der Fixierbereich (**28**) auf der Frontseiten-Etikette (**16**) aufliegt, und dass das Chipobjekt ggfs. an seiner der Frontseiten-Etikette (**16**) gegenüberliegenden Aussenfläche eine Rückseiten-Etikette (**18**) besitzt.

14. Chipobjekt (**10.1, 10.2, 10.3, 10.4, 10.5, 10.6, 10.7**) nach mindestens einem der Patentansprüche **9** bis **13,**
**dadurch gekennzeichnet,**
dass die Struktur (**20**) eine elektrisch nicht leitende Folie mit einer oder mehreren, ggfs. durch eine elektrisch leitende Zwischenschicht getrennte, Schichten (**20.1, 20.2**) ist, wobei die nach aussen gewandte Fläche der untersten Schicht (**20.2**) der Folie bereichsweise mit einer weiteren Schicht (**30**) aus Abschnitten (**30.1, 30.2**) mit gegenseitigen Zwischenräumen eines elektrisch leitenden Belags versehen ist.

15. Chipobjekt (**10.4, 10.5, 10.6**) nach Patentanspruch **14,**
**dadurch gekennzeichnet,**
dass der mindestens eine Durchbruch (**32**) und/oder Wegbruch (**33**) durch einen ersten Durchbruchteil (**32.1**) bzw. Wegbruchteil (**33.1**) in der einen Schicht (**20.1**) sowie durch einen zweiten Durchbruchteil (**32.2**) bzw. Wegbruchsteil (**33.2**) in der zweiten Schicht (**20.2**) bzw. durch einen Zwischenraum der weiteren, aus den Abschnitten (**30.1, 30.2**) bestehenden Schicht (**30**) gebildet ist, wobei die Durchbruchteile bzw. Wegbruchteile bzw. Zwischenräume der verschiedenen Schichten (**20.1, 20.2; 30**) kommunizieren und einen Versatz aufweisen, derart, dass der in den Durchbruchteilen (**32.1**) bzw. Wegbruchteilen (**33.1**) sowie in den Durchbruchteilen (**32.2**) bzw. Wegbruchteilen (**33.2**) bzw. Zwischenräumen (**25**) gebildete Kunststoffzapfen eine nagelähnliche oder abgekröpfte Form aufweist.

16. Chipobjekt (**10.7**) nach mindestens einem der Patentansprüche **9** bis **15, dadurch gekennzeichnet,**
dass die Abschnitte (**30.1, 30.2**) der zusätzlichen, elektrisch leitenden Schicht (**30**) Abschnittsenden (**30.3**) aufweisen, welche längs Vertikalberandungen des mindestens einen Durchbruchs (**32**) und/oder Wegbruchs (**23**) zum Inneren des Objektkörpers (**12**) ausgebogen sind, zur Bildung von Ankem in der Kunststoffmasse des Objektkörpers (**12**).
